(19) Europäisches Patentamt
European Patent Office
Office européen des brevets

(11) EP 1 089 476 A1

(12) **EUROPEAN PATENT APPLICATION**
published in accordance with Art. 158(3) EPC

(43) Date of publication:
**04.04.2001 Bulletin 2001/14**

(21) Application number: **00917301.4**

(22) Date of filing: **13.04.2000**

(51) Int. Cl.[7]: **H04J 13/04**

(86) International application number:
**PCT/JP00/02397**

(87) International publication number:
**WO 00/64086 (26.10.2000 Gazette 2000/43)**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.04.1999 JP 10879399**

(71) Applicant:
**MATSUSHITA ELECTRIC INDUSTRIAL CO., LTD.
Kadoma-shi, Osaka 571-8501 (JP)**

(72) Inventor: **ARIMA, Takenobu
Yokosuka-shi, Kanagawa 239-0847 (JP)**

(74) Representative:
**Grünecker, Kinkeldey,
Stockmair & Schwanhäusser
Anwaltssozietät
Maximilianstrasse 58
80538 München (DE)**

# (54) SPREAD SPECTRUM RECEIVER AND METHOD OF RECEIVING SIGNALS

(57) Despreading circuits 104 and 109 each performs despreading on a received digital signal converted in A/D conversion circuit 103. Delay profile measuring circuit 105 averages despread signals of one of despreading circuits 104, and searcher circuit 106 detects a few delayed wave signals as samples in descending order of received level from the averaged signals. Phase estimating circuit 108 estimates a phase amount of a known signal in a signal despread in the other one of despreading circuits 109, and control circuit 107 obtains complex conjugate of the estimated phase amount, and thereby obtains and sets tap coefficients of despreading circuit 109 to be multiplied for unit spread data by the delayed wave signal detected in searcher circuit 106.

100:SPREAD SPECTRUM TYPE RECEPTION APPARATUS
101
102
RECEPTION CIRCUIT
103
A/D CONVERSION CIRCUIT
104
DESPREADING CIRCUIT
105
DELAY PROFILE MEASURING CIRCUIT
106
SEARCHER CIRCUIT
CONTROL CIRCUIT
107
108
PHASE ESTIMATION CIRCUIT
DESPREADING CIRCUIT
109
OUTPUT SIGNAL

FIG.3

EP 1 089 476 A1

## Description

Technical Field

The present invention relates to a spread spectrum type reception apparatus and method suitable to be used in a mobile station, base station and the like in a mobile communication system.

Background Art

As one of conventional spread spectrum schemes, there is known a pilot interoperation type coherent detection spread spectrum scheme. This scheme is proposed in "Performance of Coherent RAKE Detection using Interpolation on DS/CDMA"; Technical Report of IEICE. RCS94-98.

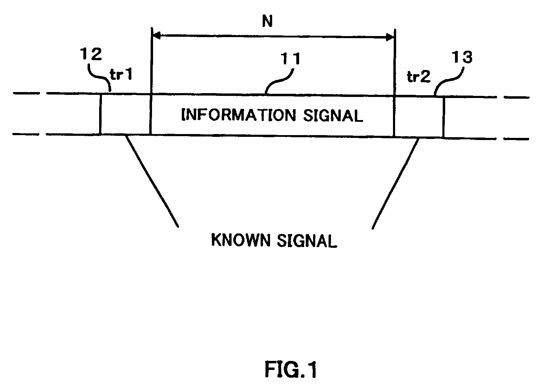

The pilot interoperation type coherent detection employs a frame structure, as illustrated in FIG.1, such that known signals 12 and 13 are embedded periodically in an information signal 11, and during each of intervals of tr1 of the known signal 12 and of tr2 of the known signal 13, a propagation path varying due to multipath Rayleigh fading is estimated.

Assuming that coefficients estimated during the intervals tr1 and tr2 are respectively Z1 and Z2, a coefficient Z(k) for use in estimating a propagation path of a kth symbol among N symbols of the information signal 11 is obtained from the following equation (1) by first-order interpolation of Z1 and Z2.

$$Z(k)=\frac{N-k}{N}Z_1+\frac{k}{N}Z_2 \qquad (1)$$

Kth Demodulated data Sk after the pilot interpolation type coherent detection is shown with the following equation (2).

$$S_k=\sum_{n=1}^{path} Z^*_{n,k}\cdot r_{n,k} \qquad \cdots (2)$$

where "path" is the number of delayed waves, and $Z^*_{n,k}$ is complex of a phase estimated by interpolation on an nth delayed wave.

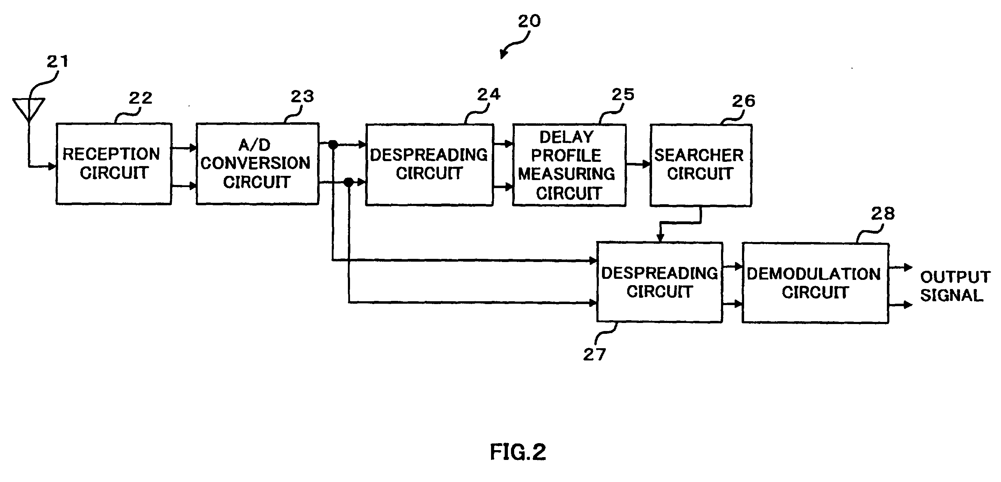

FIG.2 is a block diagram illustrating a configuration of a conventional spread spectrum type reception apparatus using the pilot interpolation type coherent detection spread spectrum scheme, and the explanation thereof is given bellow.

Conventional spread spectrum type reception apparatus 20 illustrated in FIG.2 is comprised of reception antenna 21, reception circuit 22, A/D conversion circuit 23, despreading circuit 24, delay profile measuring circuit 25, searcher circuit 26, despreading circuit 27, and demodulation circuit 28.

In the above configuration, an RF signal received at reception antenna 21 is converted into a baseband signal then amplified in reception circuit 22, and subjected to A/D conversion in A/D conversion circuit 23 with a sampling period equal to n/T (1/T=chip rate, n: integer).

Despreading circuit 24 detects the correlation of the converted digital signal with the same spreading data as that on a transmission side, and then delay profile measuring circuit 25 averages profiles each of spread data phase (averaging of received signals).

Searcher circuit 26 selects a few delayed waves as samples in descending order of received level from the averaged signals. Despreading circuit 27 performs coherent detection for each selected delayed wave to integrate over one symbol length, and demodulation circuit 28 demodulates received data by the pilot interpolation type detection, thereby performing RAKE combining in which a received signal is despread for each path and combined.

In the conventional apparatus, however, a phase difference between a former part and a latter part in a signal interval subjected to despreading (correlation processing) is large when a spreading length is long, due to a phase rotation caused by frequency offset and fading. Therefore, there is a problem that an energy of a despread signal is decreased because a direction of a vector shifts in performing the integration, and that a received quality thereby deteriorates.

Disclosure of Invention

It is an object of the present invention to provide a spread spectrum type reception apparatus and method capable of suppressing a decrease of an energy of a despread signal, and of reducing deterioration of a received quality even in a situation with frequency offset and fading existing.

This object is achieved by following processing: That is, in the present invention, first and second despreading means each performs despreading of a received digital signal, delay profile measuring means averages despread signals in the first despreading means, searcher means detects a few delayed waves as samples in descending order of received level from the averaged signals, phase estimating means estimates a phase amount of a known signal in the signal despread in the second despreading means, and control means obtains complex conjugate of the estimated phase amount, thereby obtaining and setting tap coefficients of the second despreading means to be multiplied by the delayed wave signals detected in the searcher means for unit spread data.

Brief Description of Drawings

FIG.1 is a structure diagram of a pilot interpolation type signal in a pilot interoperation type coherent detection spread spectrum scheme;
FIG.2 is a block diagram illustrating a configuration of a conventional spread spectrum type reception apparatus;
FIG.3 is a block diagram illustrating a configuration of a spread spectrum type reception apparatus according to a first embodiment of the present invention;
FIG.4 is a block diagram illustrating a configuration of a despreading circuit in the spread spectrum type reception apparatus according to the above first embodiment;
FIG.5 is a block diagram illustrating a configuration of a spread spectrum type reception apparatus according to a second embodiment of the present invention;
FIG.6 is a block diagram illustrating a configuration of a spread spectrum type reception apparatus according to a third embodiment of the present invention; and
FIG.7 is a block diagram illustrating a configuration of a control circuit of the spread spectrum type reception apparatus according to the above third embodiment.

Best Mode for Carrying Out the Invention

Embodiments of the present invention are explained below with reference to accompanying drawings.

(First embodiment)

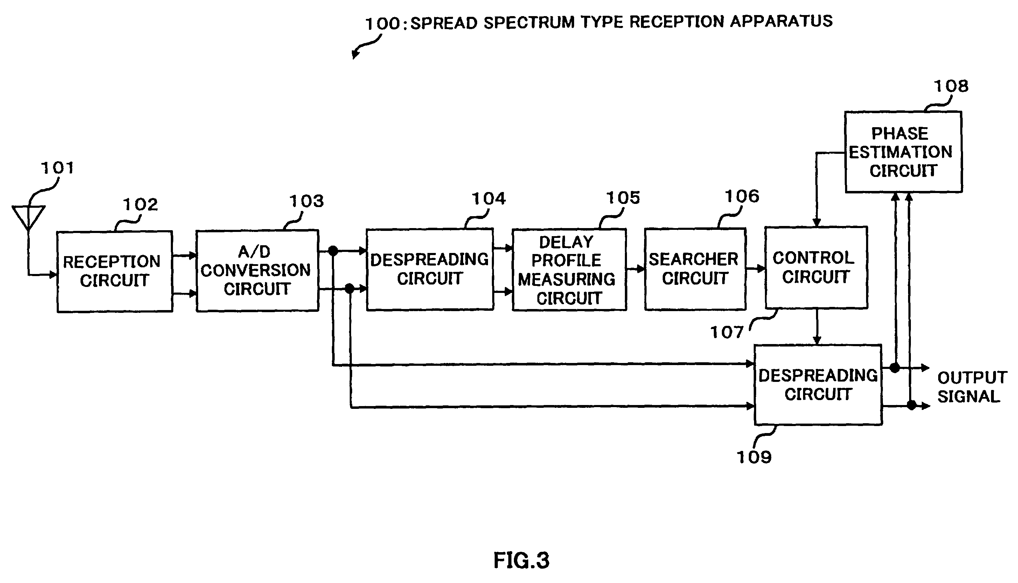

FIG.3 is a block diagram illustrating a configuration of a spread spectrum type reception apparatus according to the first embodiment of the present invention.

Spread spectrum type reception apparatus 100 illustrated in FIG.3 is comprised of reception antenna 101, reception circuit 102, A/D conversion circuit 103, despreading circuit 104, delay profile measuring circuit 105, searcher circuit 106, control circuit 107, phase estimating circuit 108, and despreading circuit 109.

Reception antenna 101 receives a radio signal from a transmission side apparatus not shown in the figure. Reception circuit 102 converts an RF signal received at reception antenna 101 into a baseband signal and amplifies the resultant. In addition, it is assumed that a received signal is a pilot interpolation type signal as explained in the conventional example.

A/D conversion circuit 103 performs A/D conversion on an output signal from reception circuit 102 with a sampling period equal to n/T (1/T=chip rate, n: integer), and thereby converts the signal into a digital signal. Despreading circuit 104 despreads the digital signal output from A/D conversion circuit 103 with the same spreading code as on a transmission side.

Delay profile measuring circuit 105 averages profiles of spread data phase (averaging of received signals) using signals output from despreading circuit 104. Searcher circuit 106 selects a few delayed waves (paths) as samples in descending order of received level (received quality) from signals averaged in delay profile measuring circuit 105.

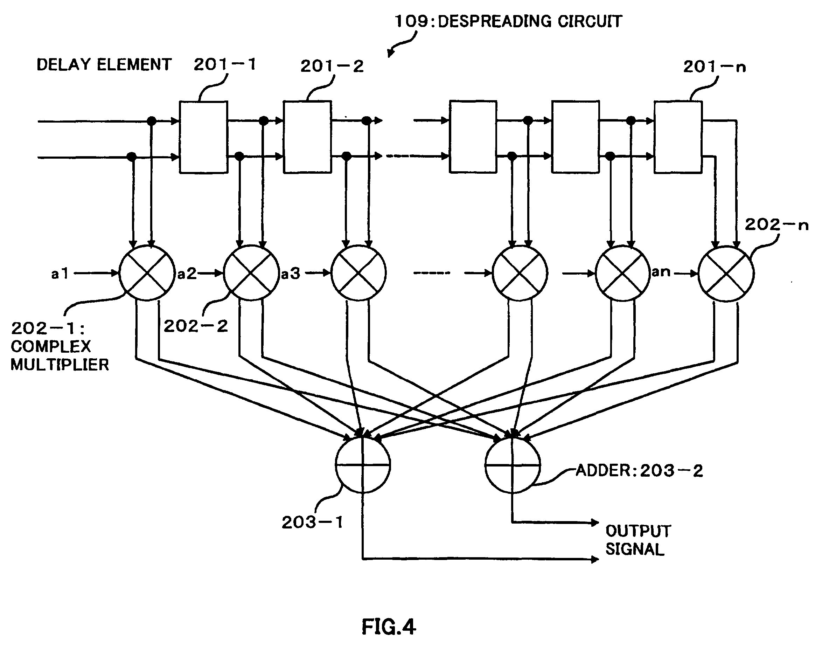

Despreading circuit 109 performs coherent detection for each spread data (for each delay element), and then performs despreading by integrating over one symbol length. As illustrated in FIG.4, despreading circuit 109 is comprised of n delay elements 201-1 to 201-n, n complex multipliers 202-1 to 202-n, and adders 203-1 to 203-2.

Each of delay elements 201-1 to 201-n delays the digital signal output from A/D conversion circuit 103 by one delay period, thereby obtaining 1 to n delays.

Each of complex multipliers 202-1 to 202-n is assigned respective one of complex tap coefficients a1 to an of which values are varied in control circuit 107, and complex-multiplies the respective one of complex tap coefficients a1 to an, the digital signal output from A/D conversion circuit 103, and a signal output from respective one of delay elements 201-1 to 201-n. Each of adders 203-1 and 203-2 adds signals output from complex multipliers 202-1 to 202-n.

As illustrated in FIG.3, phase estimating circuit 108 estimates a phase amount varying timewise by detecting respective phases of known signals 12 and 13 embedded in the information signal 11 in a received signal as illustrated in FIG.2, and outputs the estimated phase amount to control circuit 107.

Control circuit 107 designates a path selected in searcher 106 so that a signal of the path is despread in despreading circuit 109, obtains complex tap coefficients a1 to an each to be complex-multiplied by the designated path signal in despreading circuit 109 by obtaining complex conjugate of the phase amount estimated in phase estimating circuit 108, and outputs the obtained complex tap coefficients a1 to an to despreading circuit 109.

An explanation is given of the operation of spread spectrum type reception apparatus 100 with the above configuration. An RF signal received at reception antenna 101 is converted into a baseband signal and then amplified in reception circuit 102, and converted into a digital signal in A/D conversion circuit 103.

The converted digital signal is despread in despreading circuit 104, and then averaged in delay profile measuring circuit 105. Searcher circuit 106 selects a few paths as samples in descending order of received level from the averaged signals to output to control circuit 107.

Phase estimating circuit 108 detects respective phases of known signals 12 and 13 of an output signal (received signal) from despreading circuit 109, thereby estimates a phase amount varying timewise, and outputs the estimated phase amount to control circuit 107.

Control circuit 107 designates a path selected in searcher 106 so that a signal of the path is despread in despreading circuit 109, and obtains complex tap coefficients a1 to an each to be complex-multiplied by the designated path signal by obtaining complex conjugate of the phase amount estimated in phase estimating circuit 108, and outputs the obtained complex tap coefficients a1 to an to despreading circuit 109.

Despreading circuit 109 performs coherent detection with complex tap coefficients a1 to an for each designated path, and performs despreading by integrating over one symbol length. Then, another circuit after despreading circuit 109 performs RAKE combining of signals output from the circuit 109. In addition, while it is assumed in the foregoing that the received signal is the pilot interpolation type, it may be possible to multiplex an information signal and a known signal on another channel in a received signal.

Thus, according to this embodiment, A/D conversion circuit 103 converts a signal received in reception circuit 102 into a digital signal, and despreading circuit 104 despreads the digital signal. Delay profile measuring circuit 105 averages the profile of spread data phase, searcher circuit 106 selects a few delayed wave signals as samples in descending order of received level, and phase estimating circuit 108 detects a phase of a known signal of the digital signal despread in despreading circuit 109 to estimate a phase amount varying timewise. Control circuit 107 designates the delayed wave signal selected in searcher circuit 106 to be despread in despreading circuit 109, obtains complex tap coefficients a1 to an each to be complex-multiplied by the designated path signal per spread data basis in despreading circuit 109 by obtaining complex conjugate of the estimated phase amount, and sets the coefficients in despreading circuit 109.

Therefore, even when a received signal undergoes phase rotation due to frequency offset and fading, the phase rotation amount is estimated from a known signal and corrected with complex tap coefficients a1 to an, whereby it is possible to suppress a decrease of an energy of a despread signal, to reduce the deterioration of a received quality even in a situation with frequency offset and fading existing, and to obtain a signal with high quality.

(Second embodiment)

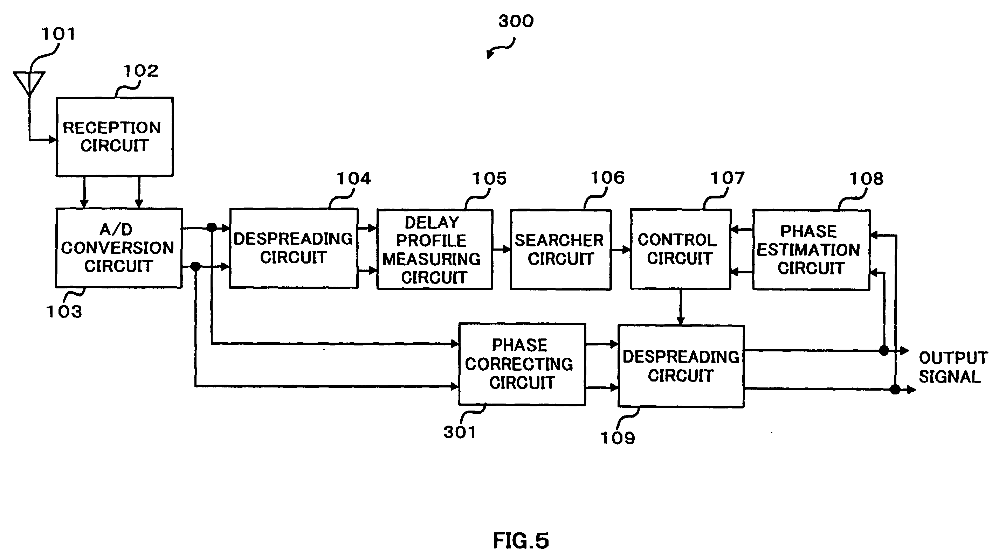

FIG.5 is a block diagram illustrating a configuration of a spread spectrum type reception apparatus according to the second embodiment of the present invention. In addition, in FIG.5, the same structural elements as in the first embodiment (FIG.3) are assigned the same reference numerals as in FIG.3 to omit the detailed explanation thereof.

Spread spectrum type reception apparatus 300 of the second embodiment illustrated in FIG.5 is comprised of phase correcting circuit 301 in addition to the structural elements illustrated in the first embodiment (FIG.3).

Phase correcting circuit 301 performs phase correction by rotating a phase of a received signal in a direction towards an original phase corresponding to a phase amount varying timewise estimated in phase estimating circuit 108.

An explanation is given of the operation of spread spectrum type reception apparatus 300 with the above configuration.

An RF signal received at reception antenna 101 is converted into a baseband signal and then amplified in reception circuit 102, and converted into a digital signal in A/D conversion circuit 103 to be output to despreading circuit 104 and phase correcting circuit 301.

The digital signal is despread in despreading circuit 104, and then averaged in delay profile measuring circuit 105. Searcher circuit 106 selects a few paths as samples in descending order of received level from the averaged signals to output to control circuit 107.

Phase estimating circuit 108 detects respective phases of known signals 12 and 13 of an output signal (received signal) from despreading circuit 109, thereby estimates a phase amount varying timewise, and outputs the estimated phase amount to control circuit 107 and phase correcting circuit 301.

Phase correcting circuit 301 performs phase correction by rotating a phase of the received signal in a direction towards an original phase corresponding to the estimated phase amount varying timewise, and outputs the corrected signal to despreading circuit 109.

Control circuit 107 designates a signal of a path selected in searcher circuit 106 to be despread in despreading circuit 109 to despread, obtains complex tap coefficients a1 to an each to be complex-multiplied by the designated path signal by obtaining complex conjugate of the phase amount estimated in phase estimating circuit 108, and outputs the obtained complex tap coefficients a1 to an to despreading circuit 109.

Despreading circuit 109 performs coherent detection with complex tap coefficients a1 to an for each designated path, and performs despreading by integrating over one symbol length. Then, another circuit after despreading circuit 109 performs RAKE combining of signals output from the circuit 109.

Thus, according to this embodiment, spread spectrum type reception apparatus 100 of the first embodiment is provided with phase correction circuit 301 before despreading circuit 109, and the circuit 301 performs phase correction by rotating a phase of a received signal in a direction towards an original phase corresponding to a phase amount varying timewise estimated in phase estimating circuit 108. Therefore, a phase rotation of the received signal is corrected before correction with complex tap coefficients a1 to an in despreading circuit 109. It is thereby possible to suppress a decrease of an energy of a despread signal more than in the first embodiment, to reduce the deterioration of a received quality also in a situation with frequency offset and fading existing, and to obtain a signal with higher quality.

Thus, by the use of phase correcting circuit 301, a phase rotation of a received signal is corrected without performing correction with tap coefficients a1 to an in despreading circuit 109. Therefore, it is possible to suppress a decrease of an energy of a despread signal, and to reduce the deterioration of a received quality also in a situation with frequency offset and fading existing.

(Third embodiment)

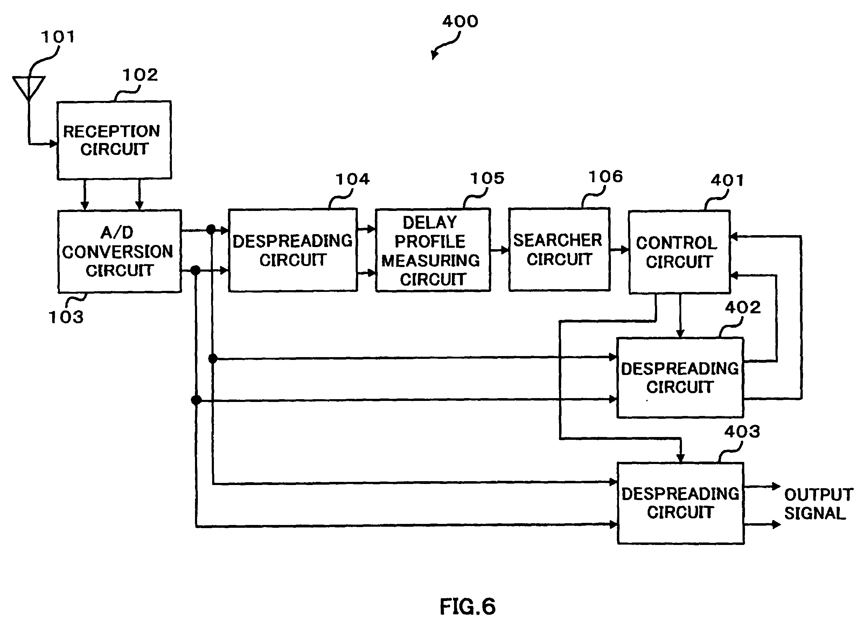

FIG.6 is a block diagram illustrating a configuration of a spread spectrum type reception apparatus according to the third embodiment of the present invention. In addition, in FIG.6, the same structural elements as in the first embodiment (FIG.3) are assigned the same reference numerals as in FIG.3 to omit the detailed explanation thereof.

Spread spectrum type reception apparatus 400 of the third embodiment illustrated in FIG.6 is comprised of reception antenna 101, reception circuit 102, A/D conversion circuit 103, despreading circuit 104, delay profile measuring circuit 105, searcher circuit 106, control circuit 401, and despreading circuits 402 and 403.

Despreading circuit 402 has the same structure as despreading circuit 109 illustrated in FIG.4, and despreads a pilot signal in a received signal subjected to digital conversion in A/D conversion circuit 103. That is, the received signal in the third embodiment has a structure in which a signal on a pilot channel (pilot signal) is multiplexed on an information signal, instead of the pilot interpolation type as the first and second embodiments.

Despreading circuit 403 has the same structure as despreading circuit 109 illustrated in FIG.4, and despreads the information signal in the received signal subjected to digital conversion in A/D conversion circuit 103.

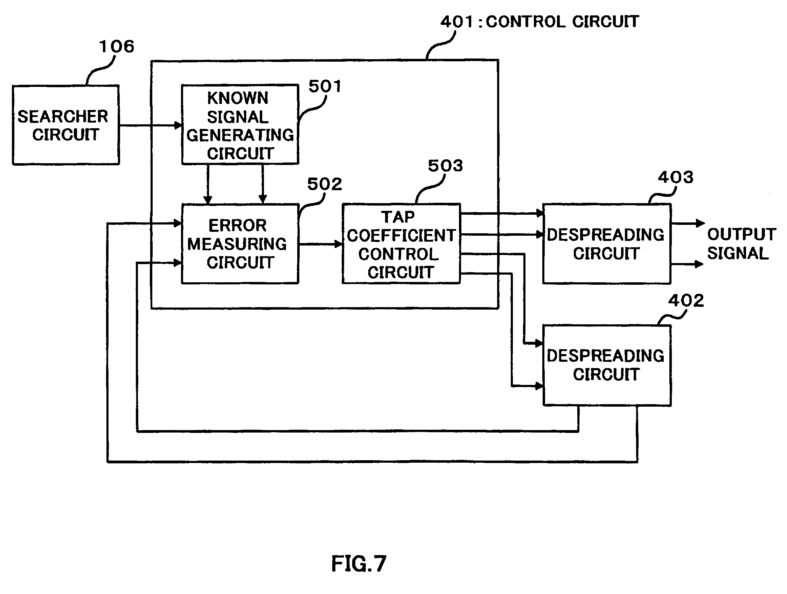

Control circuit 401 controls so that complex tap coefficients a1 to an in despreading circuits 402 and 403 are sequentially updated to correct a phase error. Control circuit 401 is comprised of known signal generating circuit 501, error measuring circuit 502 and tap coefficient control circuit 503, as illustrated in FIG. 7.

Known signal generating circuit 501 generates a known signal corresponding to a path of samples selected in searcher circuit 106 in descending order of received level. Error measuring circuit 502 measures a phase error between a pilot signal of a received signal and the known signal from known signal generating circuit 501. Tap coefficient control circuit 503 sequentially updates complex tap coefficients a1 to an of despreading circuit 402, for example, using an adaptive algorithm so as to minimize the phase error output from error measuring circuit 502, and sets the updated complex tap coefficients a1 to an in despreading circuit 403.

An explanation is given of the operation of spread spectrum type reception apparatus 400 with the above configuration. An RF signal received at reception antenna 101 is converted into a baseband signal and then amplified in reception circuit 102, and converted into a digital signal in A/D conversion circuit 103 to be output to despreading circuits 104, 402 and 403.

The digital signal is despread in despreading circuit 104, and then averaged in delay profile measuring circuit 105. Searcher circuit 106 selects a few paths as samples in descending order of received level from the averaged signals to output to control circuit 401.

In control circuit 401, known signal generating circuit 501 generates a known signal corresponding to a path selected in searcher circuit 106. Error measuring circuit 502 measures a phase error between the generated known signal and a pilot signal in the received signal from A/D conversion circuit 103. Complex tap coefficients a1 to an in despreading circuit 402 are sequentially updated so that the measured phase error signal is minimized (or 0). The updated complex tap coefficients a1 to an are set in despreading circuit 403.

Despreading circuit 403 performs coherent detection with the complex tap coefficients a1 to an set for each path designated in searcher circuit 106, and performs despreading by integrating over one symbol length. Then, another circuit after despreading circuit 403 performs RAKE combining of signals output from the circuit 403.

Thus, according to this embodiment, A/D conversion circuit 103 converts a signal received in reception circuit 102 into a digital signal, and despreading circuit 104 despreads the digital signal. Delay profile measuring circuit 105 averages the profile of spread data phase, and searcher circuit 106 selects a few delayed wave signals as samples in descending order of received level from the averaged signals, and control circuit 401 generates a known signal corresponding to a path selected in searcher circuit 106. Complex tap coefficients a1 to an in despreading circuit 402 are sequentially updated so that a phase error between the generated known signal and a pilot signal in the received signal is minimized (or 0). The updated complex tap coefficients a1 to an are set in despreading circuit 403.

Therefore, an information signal is despread always with complex tap coefficients a1 to an used to correct a phase of a pilot signal, whereby it is possible to suppress a decrease of an energy of a despread signal, to reduce the deterioration of a received quality also in a situation with frequency offset and fading existing, and to obtain a signal with high quality.

As described above, according to the present invention, it is possible to suppress a decrease of an energy of a despread signal, and to reduce the deterioration of a received quality also in a situation with frequency offset and fading existing.

This application is based on the Japanese Patent Application No.HEI11-108793 filed on April 16, 1999, entire content of which is expressly incorporated by reference herein.

Industrial Applicability

The present invention is suitable to be used in mobile communication system fields.

**Claims**

**1.** A spread spectrum type reception apparatus comprising:

first despreading means and second despreading means each for despreading a received signal;
delay profile measuring means for averaging a profile of data phase of a signal despread in said first despreading means;
searcher means for selecting a delayed wave signal with a high received level from an averaged profile;
phase estimating means for detecting a phase of a known signal in the received signal despread in said second despreading means to estimate a phase amount varying timewise; and
control means for designating the delayed wave signal selected in said searcher means to be despread in said second despreading means, while obtaining complex conjugate of the phase amount estimated to set a tap coefficient to be multiplied for each unit spread data by the delayed wave signal designated in said second despreading means.

**2.** The spread spectrum type reception apparatus according to claim 1, further comprising:

phase correcting means, provided before said second despreading means, for performing phase correction by rotating a phase of the received signal in a direction towards an original phase corresponding to the phase amount estimated in said phase estimating means.

**3.** A spread spectrum type reception apparatus comprising:

first despreading means and second despreading means each for despreading a received signal;
delay profile measuring means for averaging a profile of data phase of a signal despread in said first despreading means;
searcher means for selecting a delayed wave signal with a high received level from an averaged profile;
phase estimating means for detecting a phase of a known signal in the received signal despread in said second despreading means to estimate a phase amount varying timewise;
control means for designating the delayed wave signal selected in said searcher means to be despread in said second despreading means; and
phase correcting means for performing phase correction before despreading in said despreading means by rotating a phase of said received signal in a direction towards an original phase corresponding to the phase amount estimated in said phase estimating means.

**4.** The spread spectrum type reception apparatus according to any of claims 1 to 3, wherein the received signal is a pilot interpolation type signal in which a known signal is embedded in information signals.

**5.** The spread spectrum type reception apparatus according to any of claims 1 to 3, wherein the received signal is a signal in which an information signal and a known signal on a different channel are multiplexed.

**6.** A spread spectrum type reception apparatus comprising:

first despreading means and second despreading means each for despreading a received signal;
third despreading means for despreading a pilot signal in said received signal;
delay profile measuring means for averaging a profile of data phase of a signal despread in said first despreading means;
searcher means for selecting a delayed wave signal with a high received level from an averaged profile; and
control means for generating a known signal corresponding to the delayed wave signal selected in said searcher means, sequentially updating a tap coefficient used in said third despreading means so as to minimize a phase error between the known signal generated and said pilot signal, and setting the tap coefficient updated as a tap coefficient for use by said second despreading means.

**7.** A mobile station apparatus provided with the spread spectrum type reception apparatus according to any of claims 1 to 6.

**8.** A base station apparatus provided with the spread spectrum type reception apparatus according to any of claims 1 to 6.

**9.** A reception method comprising of:

a first despreading step and a second despreading step each of despreading a received signal;
a delay profile measuring step of averaging a profile of data phase of a signal despread in said first despreading step;
a searcher step of selecting a delayed wave signal with a high received level from an averaged profile;
a phase estimating step of detecting a phase of a known signal in the received signal despread in said second despreading step to estimate a phase amount varying timewise; and
a control step of designating the delayed wave signal selected in said searcher step to be despread in said second despreading step, while obtaining complex conjugate of the phase amount estimated to set a tap coefficient to be multiplied for unit spread data by the delayed wave signal designated in said second despreading step.

**10.** A reception method comprising:

a first despreading step and a second despreading step each of despreading a received signal;
a delay profile measuring step of averaging a profile of data phase of a signal despread in said first despreading step;
a searcher step of selecting a delayed wave signal with a high received level from an averaged profile;
a phase estimating step of detecting a phase of a known signal in the received signal despread in said second despreading step to estimate a phase amount varying timewise;
a control step of designating the delayed wave signal selected in said searcher step to be despread in said second despreading step; and
a phase correcting step of performing phase correction before despreading in said second despreading step by rotating a phase of said received signal in a direction towards an original phase corresponding to the phase amount estimated in said phase estimating step.

**11.** A reception method comprising:

a first despreading step and a second despreading step each of despreading a received signal;
a third despreading step of despreading a pilot signal in said received signal;
a delay profile measuring step of averaging a profile of data phase of a signal despread in said first despreading step;
a searcher step of selecting a delayed wave signal with a high received level from an averaged profile; and
a control step of generating a known signal corresponding to the delayed wave signal selected in said searcher step, sequentially updating a tap coefficient used in said third despreading step so as to minimize a phase error between the known signal generated and said pilot signal, and setting the tap coefficient updated as a tap coefficient for use by said second despreading step.

13
tr2
N
11
INFORMATION SIGNAL
KNOWN SIGNAL
12
tr1

FIG.1

20
21
22
RECEPTION CIRCUIT
23
A/D CONVERSION CIRCUIT
24
DESPREADING CIRCUIT
25
DELAY PROFILE MEASURING CIRCUIT
26
SEARCHER CIRCUIT
27
DESPREADING CIRCUIT
28
DEMODULATION CIRCUIT
OUTPUT SIGNAL

FIG.2

100: SPREAD SPECTRUM TYPE RECEPTION APPARATUS
101
102
RECEPTION CIRCUIT
103
A/D CONVERSION CIRCUIT
104
DESPREADING CIRCUIT
105
DELAY PROFILE MEASURING CIRCUIT
106
SEARCHER CIRCUIT
107
CONTROL CIRCUIT
108
PHASE ESTIMATION CIRCUIT
109
DESPREADING CIRCUIT
OUTPUT SIGNAL

FIG.3

109: DESPREADING CIRCUIT
DELAY ELEMENT
201－1
201－2
201－n
202－n
a1
a2
a3
an
202－1: COMPLEX MULTIPLIER
202－2
ADDER: 203－2
203－1
OUTPUT SIGNAL

FIG.4

300
101
102
RECEPTION CIRCUIT
103
A/D CONVERSION CIRCUIT
104
DESPREADING CIRCUIT
105
DELAY PROFILE MEASURING CIRCUIT
106
SEARCHER CIRCUIT
107
CONTROL CIRCUIT
108
PHASE ESTIMATION CIRCUIT
301
PHASE CORRECTING CIRCUIT
109
DESPREADING CIRCUIT
OUTPUT SIGNAL

FIG.5

400
101
102
RECEPTION CIRCUIT
103
A/D CONVERSION CIRCUIT
104
DESPREADING CIRCUIT
105
DELAY PROFILE MEASURING CIRCUIT
106
SEARCHER CIRCUIT
401
CONTROL CIRCUIT
402
DESPREADING CIRCUIT
403
DESPREADING CIRCUIT
OUTPUT SIGNAL

FIG.6

401 : CONTROL CIRCUIT
106
SEARCHER CIRCUIT
501
KNOWN SIGNAL GENERATING CIRCUIT
502
ERROR MEASURING CIRCUIT
503
TAP COEFFICIENT CONTROL CIRCUIT
403
DESPREADING CIRCUIT
402
DESPREADING CIRCUIT
OUTPUT SIGNAL

FIG.7

## INTERNATIONAL SEARCH REPORT

International application No.
PCT/JP00/02397

A. CLASSIFICATION OF SUBJECT MATTER
Int.Cl[7] H04J13/04

According to International Patent Classification (IPC) or to both national classification and IPC

B. FIELDS SEARCHED

Minimum documentation searched (classification system followed by classification symbols)
Int.Cl[7] H04J13/00-13/06

Documentation searched other than minimum documentation to the extent that such documents are included in the fields searched
Jitsuyo Shinan Koho 1926-1996 Toroku Jitsuyo Shinan Koho 1994-2000
Kokai Jitsuyo Shinan Koho 1971-2000 Jitsuyo Shinan Toroku Koho 1996-2000

Electronic data base consulted during the international search (name of data base and, where practicable, search terms used)
JOIS

C. DOCUMENTS CONSIDERED TO BE RELEVANT

| Category* | Citation of document, with indication, where appropriate, of the relevant passages | Relevant to claim No. |
|---|---|---|
| A | JP, 9-270734, A (Matsushita Electric Ind. Co., Ltd.), 14 October, 1997 (14.10.97), Full text; all drawings & US, 5822364, A & EP, 798870, A2 | 1-11 |
| A | JP, 8-335898, A (NTT Ido Tsushinmo K.K.), 17 December, 1996 (17.12.96), Full text; all drawings (Family: none) | 1-11 |
| A | JP, 10-313291, A (Yozan K.K.), 24 November, 1998 (24.11.98), Full text; all drawings & EP, 878919, A | 1-11 |
| A | JP, 11-68698, A (Matsushita Electric Ind. Co., Ltd.), 09 March, 1999 (09.03.99), Full text; all drawings & EP, 898379, A | 1-11 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 July, 2000 (11.07.00) | 25 July, 2000 (25.07.00) |

| Name and mailing address of the ISA/ | Authorized officer |
|---|---|
| Japanese Patent Office | |
| Facsimile No. | Telephone No. |

Form PCT/ISA/210 (second sheet) (July 1992)